# EUROPEAN PATENT SPECIFICATION

(11) **EP 0 315 177 B1**
(45) Date of publication and mention of the grant of the patent: **11.08.1993**
(21) Application number: 88118333.9
(22) Date of filing: 03.11.1988
(51) Int. Cl.: C04B 35/80, C04B 35/56

(54) **High-strength and high-toughness sinter and process for producing the same**
Sintererzeugnis von hoher Festigkeit und Zähigkeit und Verfahren zu seiner Herstellung
Fritte de haute résistance et de grande dureté et son procédé de fabrication

(30) Priority: 05.11.1987 JP 279884/87; 05.11.1987 JP 279885/87; 05.02.1988 JP 26198/88; 05.02.1988 JP 26199/88; 08.09.1988 JP 225197/88
(43) Date of publication of application: 10.05.1989
(73) Proprietor: UBE INDUSTRIES, LTD., Ube-shi, Yamaguchi-ken 755 (JP)
(72) Inventor: Yamamura, Takemi c/o UBE KENKYUSHO, Ube Yamaguchi (JP); Ishikawa, Toshihiro c/o UBE KENKYUSHO, Ube Yamaguchi (JP); Tamura, Makoto c/o UBE KENKYUSHO, Ube Yamaguchi (JP); Shibuya, Masaki c/o UBE KENKYUSHO, Ube Yamaguchi (JP); Okamura, Kiyohito, Ibaragi (JP); Sato, Mitsuhiko Dormitory of Tohoku University, Higashi Ibaragi-gun Ibaragi (JP)
(74) Representative: Grünecker, Kinkeldey, Stockmair & Schwanhäusser Anwaltssozietät

(56) References cited:
- EP-A- 0 021 844
- EP-A- 0 162 596
- EP-A- 0 181 208

## Description

### Field of the Invention:

The present invention relates to a high-strength and high-toughness sinter (ceramic composite material) and a process for producing the same. The high-strength and high-toughness sinter according to the present invention is used mainly for applications such as members of an internal combustion engine, e.g., a piston ring or an auxiliary combustion chamber, and members of a rocket engine, e.g., a nose cone or a nozzle.

### Description of the Prior Art:

Ceramics having excellent heat resistance known to the art include, e.g., oxide ceramics such as Al₂O₃, B₄O, MgO, ZrO₂, and SiO₂, carbide ceramics such as SiC, TiC, WC, and B₄C, nitride ceramics such as Si₃N₄, BN, and AlN, boride ceramics such as TiB₂ and ZrB₂, and silicide ceramics such as MoSi₂, WSi₂, and CrSi₂. Molded articles of these ceramics have been hitherto prepared at a very high temperature. In recent years, a sintering assistant has been energetically studied for the purpose of lowering the sintering temperature and the sintering pressure. The sintering assistant serves to improve the sinterability of ceramics and, at the same time, to prevent the sinter particles from growing, so that not only the formation of voids among the particles is prevented but also the grain boundaries are packed at a high density.

Examples of the sintering assistant used in the art include MgO, NiO, CaO, TiO₂, Al₂O₃, Y₂O₃, B₄C, B, and C. These additives are selected because they can bring about the occurrence of a phase reaction between the base ceramic and the additive so as to promote the sintering of the ceramic having a poor self-sinterability or because the sintering can easily proceed due to the formation of a plasticized liquid phase by the additive at a high temperature. Further, B and C can serve to enhance the sinterability through a lowering in the surface energy of SiC crystals.

However, when the above-described sintering assistants are present, there is a possibility that second and third phases are formed due to the reaction of a base ceramic with an assistant. These phases are present mainly at the crystal grain boundaries, and constituents of these phases bring about plastic deformation when exposed to a high temperature, which makes it impossible to produce a sinter having excellent high-temperature strength. For example, the addition of MgO to Si₃N₄ brings about the formation of a vitreous phase comprising SiMgO₃. Since this fills up the grain boundaries, an increase in the density can be attained. However, the mechanical strength of the sinter at a high temperature is sharply lowered at about 1,000°C due to the softening of the vitreous phase. In order to avoid the above-described lowering in the strength at a high temperature, it is preferred to select an assistant which does not form any vitreous phase. However, this kind of assistant is generally low in the ability of sintering, so that it becomes impossible to produce a satisfactory molded material.

As a means for eliminating the above-described inconvenience, a proposal has been made on a process for producing a ceramic sinter less susceptible to the lowering in the strength at a high temperature wherein a particular organometallic polymer is used as a binder for a ceramic powder and a mixture of the ceramic powder with the binder is heat-sintered.

For example, U.S.P. Nos. 4,336,215 and 4,556,526 each disclosed a process for producing a sinter which comprises heat-sintering a mixture of a polymetallocarbosilane with a ceramic powder after molding or simultaneously with the molding.

In the process described in the above-described U.S.Patents, the polymetallocarbosilane used as a binder of a ceramic powder is converted into an inorganic material when the mixture is heated at a high temperature. Since this inorganic material is a substance having a high melting point, the resultant sinter has relatively high strength even at a high temperature. This is because, as described on col. 6, lines 18 to 31 of the U.S.P. No. 4,336,215, the sinter produced in the process described in the above-described patents mainly comprises silicon carbide particles, a solid solution composed of SiC and TiC each produced by thermal decomposition of polytitanocarbosilane, and a grain boundary phase mainly composed of TiC₁₋ₓ.

With respect to the strength of sinters produced by the processes described in the above-described patents, for example, a sinter having a deflective strength (bending strength) 1.27·1o⁸ Pa (13.0 kg/mm²) was produced in Example 7 of the U.S.P. No. 4,336,215 by molding a mixture of a silicon carbide powder with polytitanocarbosilane and sintering the molded material at 1,200°C, and a sinter having a deflective strength (bending strength) 2.45·10⁸ Pa (25.1 kg/mm²) was produced in Example 11 of the same U.S. Patent by preliminarily heating the above-described mixture at 600°C, grinding the heated mixture, and hot-pressing the ground mixture at 1800°C.

In recent years, engineering ceramics have been required to have higher functions. For example, the development of a sinter which has high strength and hardly brings about a lowering in the strength at a high temperature has been desired.

### SUMMARY OF THE INVENTION

An object of the present invention is to provide a process for producing a high-strength and high-toughness sinter which has high mechanical strength and excellent heat resistance at room temperature, hardly brings about a lowering in the strength even at a high temperature, and further has excellent toughness.

The above-described object of the present invention can be attained by a high-strength and high-toughness sinter consisting of a crystal agglomerate maintaining a fibrous shape and composed of crystals of SiC and MC₁₋ₓ wherein M is Ti and/or Zr and x is a number of 0 or more but less than 1 (hereinafter referred to as the "first ceramic sinter").

The present invention also provides a preferable process for producing the above-described first ceramic sinter, more specifically a process for producing a high-strength and high-toughness sinter consisting of a crystal agglomerate maintaining a fibrous shape and composed of crystals of SiC and MC₁₋ₓ wherein M is Ti and/or Zr and x is a number of 0 or more but less than 1, said process comprises forming a laminate consisting of an inorganic fiber composed of the following inorganic material (i), (ii), or (iii) molding the laminate into a predetermined shape, and conducting heat-sintering simultaneously with the molding or after the molding in an atmosphere comprising at least one member selected from the group consisting of a vacuum, an inert gas, a reducing gas, and a hydrocarbon gas at a temperature or 1,700 to 2,200°C:
(i) an amorphous substance essentially consisting of silicon, M, carbon, and oxygen,
(ii) an agglomerate comprising fine crystalline grains with a diameter 5·10⁻⁸ m (500 Å) or less and essentially consisting of β-SiC, MC, a solid solution composed of β-SiC and MC and/or MC₁₋ₓ, wherein SiO_{y} and MO_{z}, wherein O<y, z≦2,may be present around these ultrafine crystalline grains, and
(iii) a system comprising a mixture of said amorphous substance (i) with said agglomerate (ii),
   wherein M is Ti and/or Zr and X is a number of 0 or more but less than 1.

The sinter of the present invention has high mechanical strength and excellent heat resistance at room temperature, hardly brings about a lowering in the strength even at a high temperature and further has excellent toughness, and the process of the present invention enables the above-described sinter to be produced on an industrial scale.

### BRIEF DESCRIPTION OF THE DRAWINGS

Fig. 1 is a surface reflection electron photomicrograph showing the structure of a crystal of a ceramic sinter according to the present invention prepared in Example 1,
Fig. 2 is a further enlarged surface reflection electron photomicrograph of Fig. 1,

### DETAILED DESCRIPTION OF THE INVENTION

At the outset, the first ceramic sinter of the present invention will be described.

It is preferred that the crystal agglomerate maintaining a fibrous shape and constituting the first ceramic sinter of the present invention comprises at least one member selected from among massive, flaky, and acicular SiC crystals, and crystals in the form of an ultrafine grain composed of SiC and MC₁₋ₓ, wherein M is Ti and/or Zr and x is a number of 0 or more but less than 1. The term "massive" used herein is intended to mean preferably a mass having a side length of 1 to 20 µm in which grains are grown in the three-dimensional direction, the term "flaky" used herein is intended to mean preferably a scale having a length of 1 to 20 µm, and the term "acicular" used herein is intended to mean preferably a shape having a length of 1 to 20 µm and a length to thickness ratio of 1.5 to 20. The size of the above-described ultrafine particle crystal is usually 5·10⁻⁸ m (500 Å) or less.

It is preferred that the first ceramic sinter of the present invention contains 40% by weight of massive, flaky, or acicular SiC crystals. When the amount of these crystals is too small, the strength of the sinter is lowered. The upper limit of the amount of these crystals is usually 95% by weight.

Next, the process for producing the first ceramic sinter of the present invention will be described.

The inorganic fiber comprising the above-described inorganic material (i), (ii), or (iii) (hereinafter referred to as the "inorganic fiber [A]") used as the starting material in the process for producing the first ceramic sinter of the present invention exhibits high self-sinterability, which makes it possible to produce an excellent sinter through a treatment at 1,700 to 2,200°C without addition of any sintering assistant.

The inorganic fiber [A] can be prepared by a process described in U.S.P. Nos. 4,342,712, 4,515,742 or the like. For example, said inorganic fiber [A] can be prepared by melt-spinning polytitanocarbosilane or polyzirconocarbosilane, making the resultant fiber infusible through a heat treatment in the air, and baking the fiber in an inert gas at 800 to 1,500°C.

The above-described inorganic fiber may be used in the fob of a continuous fiber, a chopped short fiber prepared by cutting a continuous fiber, a weave such as a plain weave, a three-dimensional weave, or a non-woven fabric prepared from a continuous fiber, and a sheet material prepared by drawing and arranging a continuous fiber in one direction.

According to the present invention, crystals are preferentially grown within' an inorganic fiber, so that it becomes possible to produce a ceramic sinter which exhibits a crystal orientation reflecting the form of use of the fiber and has been deformed so as to fill up the gaps between the fibers most effectively. For example, the use of the above-described plain weave as the inorganic fiber brings about the formation of a sinter wherein a crystal agglomerate maintaining a fibrous shape is in the same oriented state as that of the plain weave laminate, the use of the above-described sheet material as the inorganic fiber brings about a sinter wherein a crystal agglomerate maintaining a fibrous shape is in the same oriented state as that of a sheet material laminate drawn in one direction, the use of the above-described three-dimensional weave as the inorganic fiber brings about a sinter wherein a crystal agglomerate maintaining a fibrous shape is in the same oriented state as that of the three-dimensional weave, and the use of the above-described chopped short fiber as the inorganic fiber brings about the formation of a sinter wherein a crystal agglomerate maintaining a fibrous shape is oriented at random. The above-described sinters are each prepared in such a state that the section of the crystal agglomerate maintaining a fibrous shape is deformed to have a polygonal shape and the crystal agglomerates are excellently linked or bonded to each other without the intervention of any matrix among them.

Accordingly, in the present invention, the ceramic sinter having excellent performance can be produced by preparing an inorganic fiber laminate and conducting heat-sintering after molding of the laminate into a desired shape or simultaneously with the molding.

The sintering can be conducted by a process wherein a laminate after molding is sintered under enhanced, atmospheric or reduced pressure or a hot press process wherein molding and sintering are simultaneously conducted.

In the above-described process which comprises conducting molding and sintering in a separate manner, molding is conducted by pressing the laminate under a pressure of 9.81·10¹⁰ to 4.9·10¹² Pa (100 to 5,000 kg/cm²) through a mold press process, a rubber press process, an extrusion process, or a sheet process to have a predetermined shape. In the above-described molding, if necessary, a starting material of the inorganic fiber, i.e., polycarbosilane or polytitanocarbosilane, polyzirconocarbosilane, or a commercially available organic polymer may be used as a binder. The molding prepared above is then sintered to give a ceramic sinter of the present invention.

When sintering is conducted by the hot press process, a mold made of graphite and sprayed with a releasing agent composed of BN is used, and the laminate is pressed under a pressure of 1.96·10⁹ to 1.96·10¹² Pa (2 to 2,000 kg/cm²) with heating, thereby giving a sinter.

The heat-sintering temperature is 1,700 to 2,200°C, preferably 1,900 to 2,100°C. The heating at this temperature brings about the formation of massive, flaky, and/or acicular SiC crystals, thus forming a high-strength and high-toughness ceramic sinter wherein the SiC crystals are uniformly dispersed in an ultrafine grain agglomerate comprising SiC and TiC and/or ZrC. When the heat-sintering temperature is below 1,700°C, no massive, flaky, or acicular SiC crystal is formed, which makes it impossible to produce a high-strength sinter. On the other hand, when the heat-sintering temperature is above 2,200°C, the formed SiC crystals are apt to be decomposed. The heat-sintering is conducted in an atmosphere comprising at least one member selected from the group consisting of a vacuum, an inert gas, a reducing gas, and a hydrocarbon gas. Examples of the inert gas include nitrogen and carbon dioxide gases, examples of the reducing gas include hydrogen and carbon monooxide gases, and examples of the hydrocarbon gas include methane, ethane, propane, and butane gases.

The first ceramic sinter of the present invention exhibits much higher strength at room temperature than that of conventional ceramic sinters, hardly brings about a lowering in the strength even at a high temperature, and exhibits a fracture toughness value 2 to 10 times higher than that of the conventional ceramic sinters. The oxygen and at least part of carbon in a non-stoichiometric amount contained in the inorganic fiber are released during the above-described sintering according to the following reaction:

2C + SiO → SiC + CO

3C + SiO₂ → SiC + 2CO.

Presumably this brings about a lowering in the surface energy of the SiC grain and thus improves the sinterability. However, the sinter may contain 10% by weight, based on the sinter, of free carbon in a non-stoichiometric amount with respect to the silicon atom and M and further 15% by weight, based on the sinter, of oxygen in the form of SiO_{y}, wherein 0 < y ≦2, and/or MO_{z}, wherein 0 < z ≦2.

The sinter may be produced also by, if necessary, impregnating the above-described molding of the laminate before sintering with a starting material of the inorganic fiber, i.e., polycarbosilane or polytitanocarbosilane, polyzirconocarbosilane, or a silane coupling agent to treat the surface of the inorganic fiber constituting the above-described laminate, preliminarily heating the treated laminate at 800 to 1,500°C in an atmosphere comprising at least one member selected from the group consisting of a vacuum, an inert gas, a reducing gas, and a hydrocarbon gas, and sintering the heated laminate at 1,700 to 2,200°C.

The present invention will now be described with reference to the following Examples.

### Reference Example 1

A 5-ℓ three-necked flask was charged with 2.5 ℓ of anhydrous xylene and 400 g of sodium. The mixture was heated to the boiling point of xylene under a nitrogen gas stream, and 1 ℓ of dimethyldichlorosilane was dropwise added thereto over a period of 1 hr. After the completion of addition, the mixture was heated under reflux for 10 hr to form precipitates. The precipitates were collected by filtration and washed with methanol and then with water to prepare 420 g of polydimethylsilane in the form of a white powder.

Separately, 759 g of diphenyldichlorosilane and 124 g of boric acid were heated in n-butyl ether in a nitrogen atmosphere at a temperature of 100 to 120°C to prepare a white resinous material. The resinous material was further heated in vacuo at 400°C for 1 hr to prepare 530 g of polyborodiphenylsiloxane.

8.27 g of the above-prepared polyborodiphenylsiloxane was mixed with 250 g of the above-described polydimethylsilane. The mixture was heated to 350°C in a 2-ℓ quartz tube equipped with a reflux tube in a nitrogen gas stream and polymerized for 6 hr. The reaction product was allowed to cool at room temperature. Xylene was then added thereto to withdraw the reaction product in the form of a solution. Xylene was evaporated, and the residue was concentrated in a nitrogen gas stream at 320°C for 1 hr to prepare polycarbosilane

### Reference Example 2

10 g of tetrabutoxysilane was added to 50 g of polycarbosilane prepared in Reference Example 1 40 ml of xylene was added to the mixture, and the mixture was then stirred in a nitrogen atmosphere at 130°C for 1 hr. The temperature was slowly raised, and the mixture was polymerised at 320°C for 2 hr to prepare polytitanocarbosilane which is a starting material of the inorganic fiber [A].

### Reference Example 3

Polytitanocarbosilane prepared in Reference Example 2 which is a starting material of the inorganic fiber [A] was melt-spun into a fiber. The fiber was heated in the air to 180°C at a temperature raising rate of 20°C/hr to make the fiber insufible, heated in a nitrogen atmosphere to 1300°C at a temperature raising rate of 200°C/hr, and maintained at that temperature for 1 hr. The heat-treated fiber was allowed to cool to prepare the inorganic fiber [A].

The inorganic fiber [A] was ground in a mortar made of silicon nitride to prepare the powder [A] of 74 µm (200 mesh) or less.

### Example 1

Polytitanocarbosilane prepared in Rerefence Example 2 was melt-spun into a fiber. The fiber was heated in the air to 170°C at a temperature raising rate of 20°C/hr to make the fiber infusible, heated in a nitrogen atmosphere to 1000°C at a temperature raising rate of 200°C/hr, and maintained at that temperature for 1 hr. The heat-treated fiber was allowed to cool to prepare an inorganic continuous fiber [A].

Plain woven fabrics each comprising the above-described inorganic continuous fiber [A] were put on top of each other. The laminate was set in a carbon die (a sheet material having a size of 3 mm x 10 mm x 10 mm), hot-pressed in an argon gas stream under a pressure of 600 kg/cm² at 2,000°C for 0.5 hr to produce the first ceramic sinter of the present invention.

The ceramic sinter of the present invention thus produced had a bending strength of 7.85·10⁸ Pa (80 kg/mm²) (at room temperature) and 7.45·10⁸ Pa (76 kg/mm²) (at 1400°C) and a density of 3.0 g/cm³. Further, the ceramic sinter exhibited a fracture toughness value (Kic: 24) 8 times higher than that of a ceramic sinter produced from only the powder without use of the plain woven fabric.

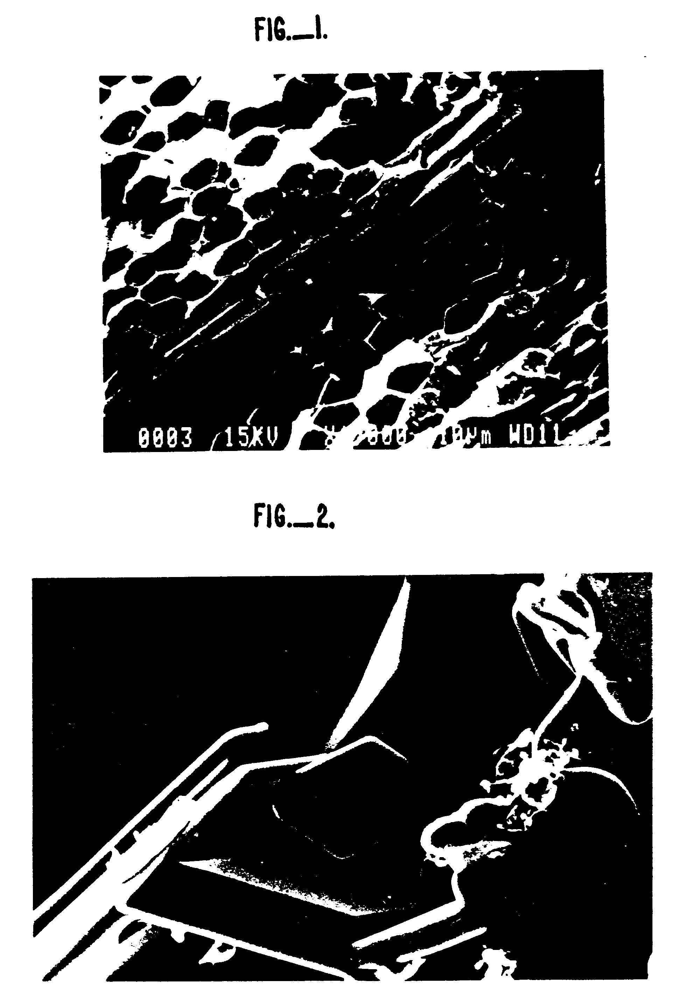

The fracture of the above-described ceramic sinter was observed under a surface reflection electron microscope. As a result, it was found that, as shown in Fig. 1, a fibrous crystal agglomerate which had been deformed into a polygonal form was closely packed in the most effective manner and the orientation of the plain woven fabric was maintained.

The above-described fibrous crystal agglomerate was further observed with a larger magnification. As a result, it was found that, as shown in Fig. 2, acicular or flaky crystals (SiC) were present.

## Claims

1. A high-strength and high-toughness sinter consisting of a crystal agglomerate maintaining a fibrous shape and composed of crystals of SiC and MC₁₋ₓ wherein M is Ti and/or Zr and x is a number of 0 or more but less than 1.

2. A high-strength and high-toughness sinter according to claim 1, wherein said crystal agglomerate maintaining a fibrous shape comprises massive, flaky and/or acicular SiC crystals and ultrafine grain crystals of SiC and MC₁₋ₓ wherein M is Ti and/or Zr and x is a number of 0 or more but less than 1.

3. A high-strength and high-toughness sinter according to claim 1, wherein said crystal agglomerate maintaining a fibrous shape is in such a deformed state as will be able to most effectively fill up fiber gaps.

4. A high-strength and high-toughness sinter according to claim 3, wherein the sections of at least part of the fibers of said crystal agglomerate maintaining a fibrous shape are deformed into a polygonal shape.

5. A high-strength and high toughness sinter according to claim 1, wherein said crystal agglomerates each maintaining a fibrous shape are excellently linked or bonded to each other without the intervention of any matrix.

6. A high-strength and high-toughness sinter according to claim 5, wherein said crystal agglomerate maintaining a fibrous shape is in the same oriented state as that of a plain weave laminate.

7. A high-strength and high-toughness sinter according to claim 5, wherein said crystal agglomerate maintaining a fibrous shape is in the same oriented state as that of a sheet material laminate drawn and arranged in one direction.

8. A high-strength and high-toughness sinter according to claim 5, wherein said crystal agglomerate maintaining a fibrous shape is in the same oriented state as that of a three-dimensional woven fabric.

9. A high-strength and high-toughness sinter according to claim 5, characterized in that said crystal agglomerate maintaining a fibrous shape is oriented at random.

10. A process for producing a high-strength and high-toughness sinter consisting of a crystal agglomerate maintaining a fibrous shape and composed of crystals of SiC and MC₁₋ₓ wherein M is Ti and/or Zr and x is a number of 0 or more but less than 1, said process comprising forming a laminate consisting of an inorganic fibre composed of the following inorganic material (i), (ii), or (iii), molding the laminate into a predetermined shape, and conducting heat-sintering simultaneously with the molding or after the molding in an atmosphere comprising at least one member selected from the group consisting of a vacuum, an inert gas, a reducing gas, and a hydrocarbon gas at a temperature of 1,700 to 2,200° C:
(i) an amorphous substance essentially consisting of silicon, M, carbon and oxygen,
(ii) an agglomerate comprising fine crystalline grains each having a diameter of 50 nm (500 Å) or less and essentially consisting of β-SiC, MC, a solid solution composed of β-SiC and MC and/or MC₁₋ₓ, wherein SiOy and MOz, wherein O < y, z ≦ 2 may be present around these ultrafine crystalline grains, and
(iii) a system comprising a mixture of said amorphous substance (i) with said agglomerate (ii).

11. A process for producing a high-strength and high toughness sinter according to claim 10, wherein said inorganic fiber is a chopped short fiber.

12. A process for producing a high-strength and high toughness sinter according to claim 10, wherein said inorganic fiber is woven into a plain weave.

13. A process for producing a high-strength and high toughness sinter according to claim 10, wherein said inorganic fiber is a sheet material drawn and arranged in one direction.

14. A process for producing a high-strength and high toughness sinter according to claim 10, wherein said inorganic fiber is in the form of a nonwoven fabric or a three-dimensional weave.

## Patentansprüche

1. Sintererzeugnis von hoher Festigkeit und Zähigkeit, bestehend aus einem eine faserige Gestalt beibehaltenden Kristallagglomerat und zusammengesetzt aus SiC- und MC₁₋ₓ-Kristallen wobei M Ti und/oder Zr ist und x eine Zahl von 0 oder mehr, jedoch weniger als 1.

2. Sintererzeugnis von hoher Festigkeit und Zähigkeit nach Anspruch 1, wobei diese eine faserige Gestalt beibehaltende Kristallagglomerate massive, flockenartige und/oder nadelförmige SiC-Kristalle und ultrafeine SiC- und MC₁₋ₓ-Kornkristalle umfassen, wobei M Ti und/oder Zr ist und x eine Zahl von 0 oder mehr, jedoch weniger als 1.

3. Sintererzeugnis von hoher Festigkeit und Zähigkeit nach Anspruch 1, wobei diese eine faserige Gestalt beibehaltenden Kristallagglomerate sich in einem solchen deformierten Zustand befinden, um eine möglichst effiziente Auffüllung der Faserzwischenräume zu ermöglichen.

4. Sintererzeugnis von hoher Festigkeit und Zähigkeit nach Anspruch 3, wobei die Bereiche wenigstens eines Teils der Fasern der eine faserige Gestalt beibehaltenden Kristallagglomerate in eine polygonale Form deformiert sind.

5. Sintererzeugnis von hoher Festigkeit und Zähigkeit nach Anspruch 1, wobei diese eine faserige Gestalt beibehaltenden Kristallagglomerate ohne das Eingreifen einer Matrix ausgezeichnet miteinander verbunden oder verkettet sind.

6. Sintererzeugnis von hoher Festigkeit und Zähigkeit nach Anspruch 5, wobei dieses eine faserige Gestalt beibehaltende Kristallagglomerat sich in dem gleichen orientierten Zustand befindet wie der eines einfachen gewebten Laminats.

7. Sintererzeugnis von hoher Festigkeit und Zähigkeit nach Anspruch 5, wobei dieses eine faserige Gestalt beibehaltende Kristallagglomerat den gleichen orientierten Zustand aufweist wie der eines Laminats, eines Bandmaterials, welches in eine Richtung gezogen und angeordnet wird.

8. Sintererzeugnis von hoher Festigkeit und Zähigkeit nach Anspruch 1, wobei dieses eine faserige Gestalt beibehaltende Kristallagglomerat sich in dem gleichen orientierten Zustand befindet wie eine dreidimensional gewebtes Erzeugnis.

9. Sintererzeugnis von hoher Festigkeit und Zähigkeit nach Anspruch 1, **dadurch gekennzeichnet,** daß dieses eine faserige Gestalt beibehaltende Kristallagglomerat zufällig orientiert ist.

10. Verfahren zur Herstellung eines Sintererzeugnisses mit hoher Festigkeit und Zähigkeit, bestehend aus einem eine faserige Gestalt beibehaltenden Kristallagglomerat und zusammengesetzt aus SiC- und MC₁₋ₓ-Kristallen, wobei M Ti und/oder Zr ist und x eine Zahl von 0 oder mehr, jedoch weniger als 1, das Verfahren umfaßt das Bilden eines Laminats, bestehend aus einer anorganischen Faser, zusammengesetzt aus dem folgenden anorganischen Material (i), (ii) oder (iii), Formen des Laminats in eine vorherbestimmte Form und Durchführen einer Wärmesinterung, gleichzeitig mit dem Formen oder nach dem Formen in einer Atmosphäre, welche wenigstens ein Bestandteil enthält, ausgewählt aus der Gruppe, bestehend aus einem Vakuum, einem Edelgas, einem reduzierenden Gas und einem Kohlenwasserstoffgas bei einer Temperatur von 1700 bis 2200 °C:
(i) eine amorphe Substanz, im wesentlichen bestehend aus Silicium, M, Kohlenstoff und Sauerstoff,
(ii) ein Agglomerat, umfassend feine kristalline Körner mit einem Durchmesser von 50 µm (500 Å) oder weniger und im wesentlichen bestehend aus β-SiC, MC, einer festen Lösung, zusammengesetzt aus β-SiC und MC und/oder MC₁₋ₓ, wobei SiO_{y} und MO_{z}, O < y, z ≦ 2, um diese ultrafeinen, kristallinen Körner vorhanden sein können, und
(iii) ein System, umfassend eine Mischung aus dieser amorphen Substanz (i) und diesem Agglomerat (ii).

11. Verfahren zur Herstellung eines Sintererzeugnisses mit hoher Festigkeit und Zähigkeit nach Anspruch 10, wobei diese anorganische Faser eine zerhackte, kurze Faser ist.

12. Verfahren zur Herstellung eines Sintererzeugnisses mit hoher Festigkeit und Zähigkeit nach Anspruch 10, wobei diese inorganische Faser zu einem einfachen Gewebe verwoben ist.

13. Verfahren zur Herstellung eines Sintererzeugnisses mit hoher Festigkeit und Zähigkeit nach Anspruch 10, wobei diese inorganische Faser ein Bandmaterial ist, welches in eine Richtung gezogen und angeordnet ist.

14. Verfahren zur Herstellung eines Sintererzeugnisses mit hoher Festigkeit und Zähigkeit nach Anspruch 10, wobei diese inorganische Faser in Form eines nicht gewobenen Erzeugnisses oder eines dreidimensionalen Gewebes vorliegt.

## Revendications

1. Fritte de haute résistance et de grande dureté constituée d'un agglomérat de cristaux gardant une forme fibreuse et constituée de cristaux de SiC et de MC₁₋ₓ où M est Ti et/ou Zr et x est un nombre égal à 0 ou supérieur à 0 mais plus petit que 1.

2. Fritte de haute résistance et de grande dureté selon la revendication 1, dans laquelle ledit agglomérat de cristaux gardant une forme fibreuse est constituée de cristaux-de SiC volumineux, lamellaires et/ou aciculaires et de cristaux à grain ultra-fin de SiC et de MC₁₋ₓ où M est Ti et/ou Zr et x est un nombre égal à 0 ou supérieur à 0 mais plus petit que 1.

3. Fritte de haute résistance et de grande dureté selon la revendication 1, dans laquelle ledit agglomérat de cristaux gardant une forme fibreuse est dans un tel état déformé qu'il est capable de remplir de la manière la plus efficace des espaces entre les libres.

4. Fritte de haute résistance et de grande dureté selon la revendication 3, dans laquelle les tronçons d'au moins une partie des fibres dudit agglomérat de cristaux gardant une forme fibreuse sont déformés en une forme polygonale.

5. Fritte de haute résistance et de grande dureté selon la revendication 1, dans laquelle ledits agglomérats de cristaux gardant une forme fibreuse sont reliés ou fixés l'un à l'autre de manière excellente sans l'intervention d'aucune matrice.

6. Fritte de haute résistance et de grande dureté selon la revendication 5, dans laquelle ledit agglomérat de cristaux gardant une forme fibreuse est dans le même état orienté que celui d'un stratifié tissé uni.

7. Fritte de haute résistance et de grande dureté selon la revendication 5, dans laquelle ledit agglomérat de cristaux gardant une forme fibreuse est dans le même état orienté que celui d'un stratifié de matériaux en feuilles étirés et agencés dans une direction.

8. Fritte de haute résistance et de grande dureté selon la revendication 5, dans laquelle ledit agglomérat de cristaux gardant une forme fibreuse est dans le même état orienté que celui d'un tissu tissé en trois dimensions.

9. Fritte de haute résistance et de grande dureté selon la revendication 5, caractérisée en ce que ledit agglomérat de cristaux gardant une forme fibreuse est orienté de manière aléatoire.

10. Procédé de fabrication d'une fritte de haute résistance et de grande dureté constituée d'un agglomérat de cristal gardant une forme fibreuse et composé de cristaux de SiC et MC₁₋ₓ où M est Ti et/ou Zr et x est un nombre égal à 0 ou supérieur à 0 mais plus petit que 1, ledit procédé consistant à former un stratifié constitué d'une fibre inorganique composée du matériau inorganique suivant (i), (ii), ou (iii), mouler le stratifié dans une forme prédéterminée, et effectuer un frittage à chaud simultané au moulage ou après le moulage dans une atmosphère constituée au moins d'un élément choisi dans le groupe constitué du vide, d'un gaz inerte, d'un gaz réducteur, et d'un gaz hydrocarbure, à une température de 1700 à 2200°C :
(i) une substance amorphe constituée essentiellement de silicium, M, carbone et oxygène,
(ii) un agglomérat constitué de grains cristallins fins ayant chacun un diamètre de 50 nm (500 Å) ou plus petit et essentiellement constitué de β-SiC, MC, une solution solide composée de β-SiC et MC et/ou MC₁₋ₓ, dans lequel SiOy et MOz, où o < y, z ≦ 2 peuvent être présents autour de ces grains cristallins ultra-fins, et
(iii) un système constitué d'un mélange de ladite substance amorphe (i) et dudit agglomérat (ii).

11. Procédé de fabrication d'une fritte de haute résistance et de grande dureté selon la revendication 10, dans lequel ladite fibre inorganique est une fibre courte coupée.

12. Procédé de fabrication d'une fritte de haute résistance et de grande dureté selon la revendication 10, dans lequel ladite fibre inorganique est tissée sous forme d'un tissu uni.

13. Procédé de fabrication d'une fritte de haute résistance et de grande dureté selon la revendication 10, dans lequel ladite fibre inorganique est un matériau en feuille étiré et agencé dans une direction.

14. Procédé de fabrication d'une fritte de haute résistance et de grande dureté selon la revendication 10, dans lequel ladite fibre inorganique est sous la forme d'un tissu non tissé ou d'un tissé en trois dimensions.
